# EUROPEAN PATENT APPLICATION

(11) **EP 4 406 699 A1**
(43) Date of publication of application: **31.07.2024**
(21) Application number: 23878363.3
(22) Date of filing: 25.10.2023
(51) Int. Cl.: B24D 11/00, B24D 3/02

(54) **SHEET-FORM POLISHING ARTICLE**

(30) Priority: 28.10.2022 JP 2022173119
(71) Applicant: Kovax Corporation, Tokyo 173-8585 (JP)
(72) Inventor: KURAMOCHI Norio, Tokyo 173-8585 (JP); YOSHIDA Yukio, Tokyo 173-8585 (JP)
(74) Representative: Müller-Boré & Partner Patentanwälte PartG mbB
(86) International application number: PCT/JP2023/038502
(87) International publication number: WO 2024/090474

(57) **Abstract**

[Problem]

Provided is a long-life sheet-like abrasive article which comprises an abrasive material layer comprising closed-cell bodies and abrasive grains, wherein the closed-cell bodies not only provide air voids for discharging chips, but also ensure a space between the surface of the abrasive material layer and a workpiece material, thereby facilitating discharge of chips of the workpiece material, and, as the closed-cell bodies in a surface part of the abrasive material layer break up due to friction caused by an abrading work, new abrasive grains act on a workpiece material, thereby allowing the abrasive material layer to have self-dressing ability.

[Solution]

The sheet-like abrasive article comprises a substrate, and an abrasive material layer provided on one surface of the substrate, wherein the abrasive material layer comprises closed-cell bodies, first abrasive grains, and a first adhesive binder, wherein: each of the closed-cell bodies has an inner diameter of 30 µm to 200 µm; the first abrasive grains have an average grain size which is equal to or less than of one third of the inner diameter of each of the closed-cell bodies; and the first adhesive binder adhesively bonds the abrasive material layer to the substrate, and wherein the closed-cell bodies, the first abrasive grains and the first adhesive binder account for 70% by volume to 85% by volume, 5% by volume to 13% by volume, and a remainder, respectively, based on a volume of an entirety of the abrasive material layer.

## Description

### BACKGROUND OF THE INVENTION

### Field of the Invention

The present invention relates to a sheet-like abrasive article. In particular, the present invention relates to a sheet-like abrasive article capable of being suitably used for abrading (polishing) to finish a coating film to a mirror surface state or to a roughness just before becoming a mirror surface. The sheet-like abrasive article of the present invention can be effectively used not only for industrial grinding and polishing processing but also in the cleaning field such as the removal of scales on the surfaces of a metal and an induction heating (IH) heater and on the surfaces of glass and toilet porcelain.

### Description of Related Art

A lapping film (abrasive material), which is generally a precision abrading product, is used to finish the surface of an article to a mirror surface state or until just before becoming a mirror surface. However, in abrading (polishing) to finish a coating film to such a state, it is impossible for the lapping film to obtain sufficient abrasive ability. For this reason, the lapping film is seldom or never used in the field of mirror-finishing a coating film.

In the field of abrading (polishing) a coating film to a mirror-finished state, an abrasive material (trade name: Trizact) manufactured by 3M Company is widely used. The Trizact abrasive material is described as an abrasive material applying a technique, called "microreplication". Specifically, it is allegedly said that the Trizact abrasive material is characterized by a regular microreplication structure, and realizes stable finish and stable abrasive ratio, while preventing thermal deformation. It is also allegedly said that since new abrasive grains emerge as a three-dimensional structure breaks up, it becomes possible to perpetuate uniform finish and prevent rework, and since abraded waste falls into recesses of a three-dimensional surface structure, it becomes less likely to undergo clogging, thereby making it possible to sustain abrading performance.

However, in fact, it is extremely difficult to use a molded abrasive material consisting of pyramid-like structures of the Trizact abrasive material, until it is completely worn away. Thus, a product with a longer life than Trizact is desired.

The following Patent Document 1 discloses an abrasive material containing a cured product of a thermosetting resin powder, and comprising: a porous body having a plurality of cells (bubbles) derived from thermally-expandable microspheres; and abrasive grains dispersed in the porous body.

### CITATION LIST

Parent Document; JP-A 2018-103342

### BRIEF SUMMARY OF THE INVENTION

### Technical Problem

The present invention provides a sheet-like abrasive article comprising an abrasive material layer, wherein the abrasive material layer comprises: closed-cell bodies each having a given inner diameter; and abrasive grains having an average grain size which has a given relationship with the inner diameter of each of the closed-cell bodies, wherein a percent by volume of the closed-cell bodies and a percent by volume of the abrasive grains, with respect to the entire abrasive material layer, are set to fall within given ranges, respectively, whereby the closed-cell bodies not only provide air voids for discharging chips, but also ensure a space between the surface of the abrasive material layer (when a thin top coat is provided on the abrasive material layer, the surface of the top coat) and a workpiece material, thereby facilitating discharge of chips of the workpiece material. The present invention also provides a long-life sheet-like abrasive article which comprises an abrasive material layer comprising closed-cell bodies and abrasive grains, wherein the abrasive grains are present on wall surfaces of the closed-cell bodies, whereby as the closed-cell bodies in a surface part of the abrasive material layer break up due to friction caused by an abrading work, new abrasive grains act on a workpiece material, thereby allowing the abrasive material layer to have self-dressing ability.

### Solution to Problem

Specifically, the present invention provides a sheet-like abrasive article comprising a substrate, and an abrasive material layer provided on one surface of the substrate, wherein the abrasive material layer comprises closed-cell bodies, first abrasive grains, and a first adhesive binder, wherein: each of the closed-cell bodies has an inner diameter of 30 µm to 200 µm; the first abrasive grains have an average grain size which is equal to or less than of one third of the inner diameter of each of the closed-cell bodies; and the first adhesive binder adhesively bonds the abrasive material layer to the substrate, and wherein the closed-cell bodies, the first abrasive grains and the first adhesive binder account for 70% by volume to 85% by volume, 5% by volume to 13% by volume, and a remainder, respectively, based on a volume of an entirety of the abrasive material layer.

The sheet-like abrasive article of the present invention may further comprise a top coat provided on one surface of the abrasive material layer on a side opposite to the other surface thereof in contact with the substrate, wherein the top coat comprises second abrasive grains, a second adhesive binder and a metal soap, the second adhesive binder adhesively bonding the top coat to the abrasive material layer.

Preferably, in the sheet-like abrasive article of the present invention, the closed-cell bodies are derived from thermally-expandable microcapsules.

Preferably, in the sheet-like abrasive article of the present invention, the first adhesive binder is composed of a photo-curable resin.

The sheet-like abrasive article of the present invention may further comprise a cushioning material layer provided on the other surface of the substrate on a side opposite to the one surface thereof in contact of the abrasive material layer.

In this case, the cushioning material layer is preferably composed of sponge.

The sheet-like abrasive article of the present invention may further comprise a pressure-sensitive adhesive layer provided on the other surface of the substrate on a side opposite to the one surface thereof in contact with the abrasive material layer (on the back side of an abrasive surface of the sheet-like abrasive article). Alternatively, the above sheet-like abrasive article comprising the cushioning material layer may further comprise a pressure-sensitive adhesive layer on the back side of an abrasive surface of the sheet-like abrasive article.

The sheet-like abrasive article of the present invention may further comprise an engagement member layer provided on the other surface of the substrate on a side opposite to the one surface thereof in contact with the abrasive material layer. Alternatively, the above sheet-like abrasive article comprising the cushioning material layer may further comprise an engagement member layer on the back side of an abrasive surface of the sheet-like abrasive article.

In this case, the engagement member layer is preferably composed of a hook and loop fastener.

In the present invention, the closed-cell bodies in the abrasive material layer provide air voids in the abrasive material layer and further ensure a space between the surface of the abrasive material layer and a workpiece material, so that it is possible to obtain a sheet-like abrasive article exhibiting excellent chip discharging ability, and having self-dressing ability based on the closed-cell bodies present in the abrasive material layer in large numbers. The sheet-like abrasive article according to the present invention has efficient abrading workability, and provides a large abraded area per unit abrasive material area.

### BRIEF DESCRIPTION OF THE SEVERAL VIEWS OF THE DRAWINGS

FIG. 1 is an enlarged sectional view schematically showing one embodiment of a sheet-like abrasive article according to the present invention.
FIG. 2 is an enlarged sectional view schematically showing another embodiment of the sheet-like abrasive article according to the present invention.

### DETAILED DESCRIPTION OF THE INVENTION

Some embodiments of the present invention will now be described.

### (Substrate)

A substrate used in the sheet-like abrasive article of the present invention may be a polyester film, a latex impregnated sheet, a latex barrier base sheet, a combination thereof, or one of them subjected to surface treatment, etc. For example, when a polyester film is used as the substrate, it may be suitably used after being subjected to easy-adhesion treatment to have improved adherence property.

The thickness of the substrate may be 25 to 500 µm, preferably 50 to 220 µm.

### (Abrasive Material Layer)

An abrasive material layer comprised in the sheet-like abrasive article of the present invention comprises closed-cell bodies, first abrasive grains, and a first adhesive binder.

From the viewpoint that the abrasive article of the present invention has a sheet-like shape, etc., it is desirable that the thickness of the abrasive material layer to be formed on the substrate is equal to or less than 400 µm.

### (Closed-Cell Bodies)

As the closed-cell bodies, it is possible to use hollow balloons, specifically such as phenol hollow balloons, glass hollow balloons, or acrylonitrile thermally-expandable hollow balloons. Among them, acrylonitrile thermally-expandable hollow balloons (thermally-expandable microcapsules) are particularly suitable, in that since the balloon in a pre-expansion state has relatively high strength, it can be easily handled when preparing an application liquid for the abrasive material layer in a step of producing the abrasive material layer, and since the specific gravity of the balloon in the pre-expansion state is not largely different from those of other raw materials of the abrasive material layer, raw materials of the application liquid for the abrasive material layer can be uniformly mixed and stirred, and thus it is possible to easily achieve a uniform distribution of the closed-cell bodies in the abrasive material layer.

The inner diameter of each of the closed-cell bodies (this inner diameter means the size of each air void in the abrasive material layer, and when the closed-cell bodies are derived from thermally-expandable balloons, it is equivalent to the inner diameter of each of the thermally-expandable balloons in a post-expansion state) is 30 µm to 200 µm. If the inner diameter of each of the closed-cell bodies is less than 30 µm, it would become difficult to form a space enough to discharge chips generated during abrading. On the other hand, from a viewpoint of stabilizing the strength of the abrasive material layer, it would be desirable that the inner diameter of each of the closed-cell bodies is equal to or less than one half of the thickness of the abrasive material layer. Specifically, since it would be desirable that the thickness of the abrasive material layer is equal to or less than 400 µm, as mentioned above, the upper limit of the inner diameter of each of the closed-cell bodies is 200 µm. The inner diameter of each of the closed-cell bodies is preferably 50 µm to 150 µm. The inner diameter of each of the closed-cell bodies can be measured using a digital microscope (e.g., digital microscope VHX-6000 manufactured by KEYENCE Corporation).

The inner diameter of each of the closed-cell bodies is equal to or greater than three times an average grain size of abrasive grains used in the abrasive material layer (in other words, the average grain size of the abrasive grains is equal to or less than one third of the inner diameter of each of the closed-cell bodies).

The reason why the average grain size of the abrasive grains is set to be equal to or less than one third of the inner diameter of each of the closed-bell bodied is that if the average grain size of the abrasive grains exceeds one third of the inner diameter of each of the closed-cell bodies, it causes a situation where the abrasive grains are more likely to be unevenly present around each of the thermally-expungable balloons, when the application liquid for the abrasive material layer is applied and then the thermally-expandable balloons are expanded.

The average grain size of the abrasive grains can be measured by, e.g., the electrical resistance test method (see JIS R 6001-2: 2017).

### (Abrasive Grains)

The average grain size of the abrasive grains of the abrasive material layer (first abrasive grains) is equal to or less than one third of the inner diameter of each of the closed-cell bodies, as mentioned above.

As the abrasive grains of the abrasive material layer, abrasive grains having an average grain size of 0.3 µm to 46 µm may be suitably used. The average grain size of the abrasive grains can be determined using, e.g., an electrical resistance method as a grain size measuring method.

As the abrasive grains of the abrasive material layer, it is possible to use abrasive grains comprised of diamond, cubic boron nitride, alumina, silicon carbide, cerium oxide, or silicon dioxide, independently, or in the form of a combination of two or more of them.

### (Adhesive Binder)

The adhesive binder of the abrasive material layer (first adhesive binder) is not particularly limited as long as it is capable of adhesively bonding the abrasive material layer to the substrate, and examples thereof may include photo-curable acrylic resin, photo-curable epoxy resin, photo-curable urethane resin, thermosetting epoxy resin, thermosetting phenolic resin, thermosetting urethane resin, ethylene vinyl acetate resin, polyethylene resin, polyvinyl chloride resin, polypropylene resin, acrylonitrile butadiene styrene copolymer synthetic resin, and ethylene propylene rubber.

For example, when thermally-expandable microcapsules (such as acrylonitrile thermally-expandable balloons) are used as the closed-cell bodies, a type of adhesive binder suited to be used in combination with the thermally-expandable microcapsules is a photo-curing adhesive. This is because it is possible to cure the adhesive binder by means of photo-curing at an arbitrary timing after completion of expansion of the thermally-expandable balloons, and thus it becomes easy to attain an abrasive material layer which contains the closed-cell bodies, the abrasive grains and the adhesive binder, at a (volume) ratio as preliminarily designed. On the other had, if there is a need to use a thermoplastic or thermosetting resin needs as the adhesive binder, the types of thermally-expandable balloons and adhesive binder may in due course be selected while taking into consideration conflict between an expansion temperature of the thermally-expandable balloons and a curing temperature or softening temperature of the resin.

### (Top Coat)

The sheet-like abrasive article of the present invention may comprise a top coat provided on one surface of the abrasive material layer on the side opposite to the other surface thereof in contact with one surface of the substrate.

The top coat comprises second abrasive grains, a second adhesive binder and a metal soap. Further, when needed, it may optionally comprise an antifoaming agent, a leveling agent, etc.

When the top coat is provided, it becomes possible to obtain advantageous effects such as: reinforcement of the abrasive material layer formed by the first adhesive binder; reduction of the occurrence of deep abrasive scratches; and improvement of cutting ability.

### (Abrasive Grains)

Abrasive grains to be used as the abrasive grains of the top coat (second abrasive grains) may be the same as or may be different from the abrasive grains of the abrasive material layer (first abrasive grains), in terms of type and/or grain size.

### (Adhesive Binder)

The adhesive binder of the top coat (second adhesive binder) is not particularly limited as long as it is capable of adhesively bonding the top coat to the abrasive material layer.
Here, as the adhesive binder of the top coat (second adhesive binder), it is possible to use photo-curable acrylic resin, photo-curable epoxy resin, photo-curable urethane resin, thermosetting epoxy resin, thermosetting phenolic resin, thermosetting urethane resin, ethylene vinyl acetate resin, polyethylene resin, polyvinyl chloride resin, polypropylene resin, acrylonitrile butadiene styrene copolymer synthetic resin, ethylene propylene rubber, hydroxypropyl methylcellulose, hydroxypropylcellulose, ethylcellulose, polyvinyl butyral, polyvinyl acetal, etc. An adhesive binder to be used as the adhesive binder of the top coat (second adhesive binder) may be the same as or may be different from the adhesive binder of the abrasive material layer (first adhesive binder).

### (Metal Soap)

Examples of the metal soap include zinc stearate, magnesium stearate, calcium stearate, lithium stearate, and mixtures thereof.

By blending a metal soap, it becomes possible to reduce the probability of formation of deep scratches, by antifriction properties of the metallic soap.

In a case where the use of a metal soap-blended abrasive article is prohibited in a part of an abrading process, top coating may be performed using a metal soap-free material.

A sponge such as a sponge cushion may be adhesively attached as a cushioning layer to the back side of an abrasive surface of the abrasive article (the other surface of the substrate on the side opposite to the one surface thereof in contact with the abrasive material layer). The thickness of the sponge is preferably 2 mm to 20 mm, more preferably 3 mm to 10 mm.

A pressure-sensitive adhesive layer and/or an engagement member layer such as a hook and loop fastener, may also be provided on the back side of the abrasive surface of the abrasive article.

The abrasive article of the present invention may be produced, e.g., in the following manner.

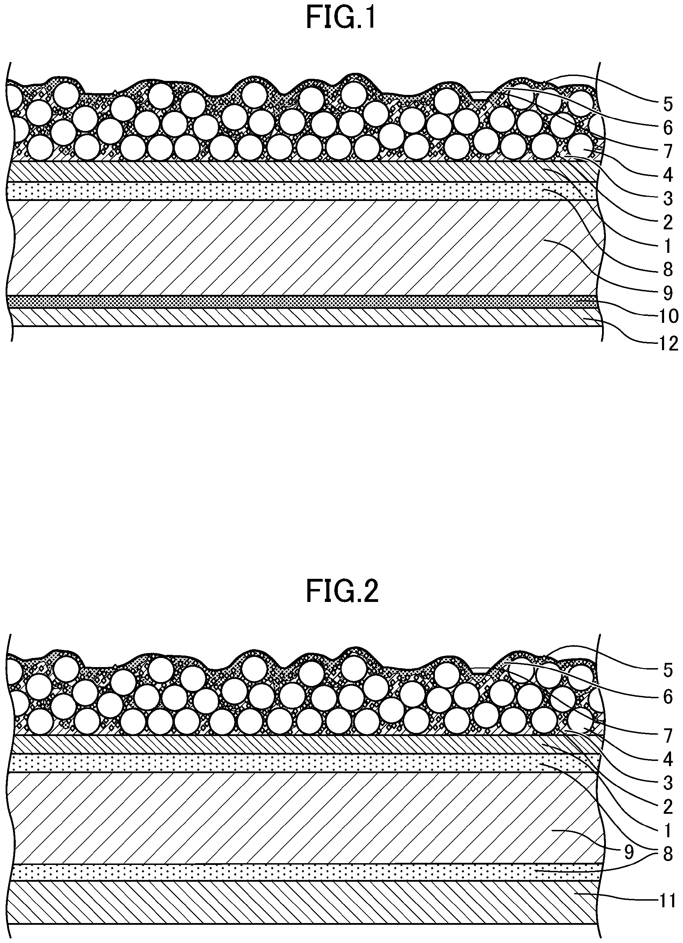

Referring to FIG. 1, first of all, an application liquid for the abrasive material layer is prepared which comprises abrasive grains 2, an adhesive binder 3, thermally-expandable microcapsules (thermally-expandable hollow balloons) 4 and a solvent. Preferably, the solvent is a solvent compatible with the adhesive binder 3, or a volatile solvent capable of dissolving the adhesive binder 3. Examples of the solvent include methyl ethyl ketone, methyl isobutyl ketone, toluene, xylene, methanol, ethanol, isopropyl alcohol, ethyl acetate, butyl acetate, propylene glycol monomethyl ether, propylene glycol monomethyl ether acetate, and water.

Then, the application liquid is applied onto a substrate (polyester film) 1 with a knife coater, and the thermally-expandable hollow balloons 4 are expanded by heating, while the solvent is removed and dried, thereby obtaining an abrasive material layer. When a thermosetting resin is used as the adhesive binder 3, curing and polymerization may be performed in the above process.

When a photopolymerizable adhesive binder is used as the adhesive binder 3, the adhesive binder is subsequently polymerized, e.g., by using a photoinitiator and performing ultraviolet (UV) irradiation. Examples of the photoinitiator include IGM Resin B.V, Omnirad651, Omnirad184, Omnirad907, Omnirad1173, Omnirad2959, Omnirad127, Omnirad369, Omnirad369E, Omnirad379EG, OmniradTPO, Omnirad819, OmniradMBF, Omnirad754, OmniradOXE01, OmniradOXE02, OmniradOXE03, and OmniradOXE04.

Further, a top coat comprising abrasive grains 5 and a metallic soap 6 is provided on the abrasive material layer. An antifoaming agent, a leveling agent, etc., may be added to the top coat, as needed.

An application liquid for the top coat is prepared using a solvent capable of dissolving or dispersing the abrasive grains 5, the metallic soap 6 and an adhesive binder 7. The application liquid is applied onto the surface of the abrasive material layer of the abrasive article using a two-roll coater or the like, and then subjected to hot-air drying (when a thermosetting resin is used as the adhesive binder 7) or to UV irradiation (when a photopolymerizable adhesive binder is used as the adhesive binder 7) to produce the top coat.

After applying a pressure-sensitive adhesive (or adhesive) 8 on the back side of the abrasive surface of the abrasive article, a sponge 9 may be attached to the pressure-sensitive adhesive (or adhesive) 8, and a pressure-sensitive adhesive (or double-sided adhesive tape) 10 applied on an appropriate release paper 12 is attached onto the sponge 9.

Alternatively, referring to FIG. 2, after applying a pressure-sensitive adhesive (or adhesive) 8 on the back side of the abrasive surface of the abrasive article, and attaching a sponge 9 to the pressure-sensitive adhesive 8, a pressure-sensitive adhesive (or adhesive) 8 may be attached onto the sponge 9 located on the back side of the abrasive surface of the abrasive article, and then a hook and loop fastener 11 may further be attached to the pressure-sensitive adhesive (or adhesive) 8.

Last of all, the obtained intermediate product is cut out in an arbitrary shape by laser processing or by using a hydraulic press cutting die, thereby completing an abrasive article having a desired size and shape.

### EXAMPLES

Examples will now be shown and described to provide better understanding of the present invention and its advantages, but the present invention is not limited to the following examples.

### (Example 1)

First of all, a polyester film (CRISPER K2312 manufactured by Toyobo Co., Ltd.) was prepared as the substrate.

Then, in order to produce an application liquid for the abrasive material layer, to be applied to the substrate, raw materials were mixed to have the following composition, and stirred.

**Table 1**

| | | |
|---|---|---|
| Abrasive Grains | GC (green silicon carbide abrasive material) #3000 manufactured by FUJIMI Inc. | 45.1 weight parts |
| Thermally-Expandable Microcapsules | ADVANCELL EHM303 manufactured by Sekisui Chemical Co., Ltd. | 2.58 weight parts |
| Adhesive Binder A | Photo-curable resin KAYARAD DPCA-60 manufactured by Nippon Kayaku Co., Ltd. | 12.2 weight parts |
| Adhesive Binder B | Photo-curable resin KAYARAD R-172 manufactured by Nippon Kayaku Co., Ltd. | 8.4 weight parts |
| Antisettling Agent | ASAT250F manufactured by ITOH OIL CHEMICALS Co., Ltd. | 1.3 weight parts |
| Photopolymerization Initiator | Omnirad 819 manufactured by IGM Resins B.V. | 0.8 weight parts |
| Solvent | MEK (methyl ethyl ketone) manufactured by SANKYO CHEMICAL Co., Ltd. | 29.6 weight parts |

The produced application liquid for the abrasive material layer was applied onto one, first, surface of the substrate to have a thickness of 250 g/m², using a knife coater. The application liquid was heated at 160°C for 5 minutes to vaporize the solvent and expand the thermally-expandable microcapsules. Then, the application liquid was irradiated with UV light using a HERAEUS D bulb, under conditions including an output intensity of 240 W/cm, an output setting of 100%, and a speed of 10 m/min, to photopolymerize the adhesive binder to cure the application liquid, thereby forming the abrasive material layer.

Subsequently, in order to produce an application liquid for the top coat, to be applied to the abrasive material layer, raw materials were mixed to have the following composition, and stirred.

**TABLE 2**

| | | |
|---|---|---|
| Abrasive Grains | GC (green silicon carbide abrasive material) #3000 manufactured by FUJIMI Inc. | 3.5weight parts |
| Adhesive Binder | ETHOCEL (ethyl cellulose) STD-100 manufactured by Nisshin Kasei Co., Ltd. | 6.5 weight parts |
| Metal Soap | Calcium stearate manufactured by NOF Corporation | 31.7 weight parts |
| Solvent A | Toluene manufactured by SANKYO CHEMICAL Co., Ltd. | 46.6 weight parts |
| Solvent B | Methanol manufactured by SANKYO CHEMICAL Co., Ltd. | 11.7 weight parts |

The produced application liquid for the top coat was applied onto the abrasive material layer to have a thickness of 50 g/m², using a two-roll coater. The applied application liquid was heated at 100°C for 2 minutes to vaporize the solvent, thereby forming the top coat.

Further, a double-sided adhesive tape (No. 5000NS manufactured by Nitto Denko Corporation) was attached as a pressure-sensitive adhesive layer to the other, second, surface of the substrate on the side opposite to the first surface thereof on which the abrasive material layer was formed, and the tape was laser-processed to produce a 32ϕ sheet-like abrasive article.

### (Example 2)

Except that the composition of raw materials for producing the application liquid for the abrasive material layer was set as shown in the following table (thermally-expandable microcapsules were blended in a smaller amount), a sheet-like abrasive article was produced in the same manner as that in Example 1.

**Table 3**

| | | |
|---|---|---|
| Abrasive Grains | GC (green silicon carbide abrasive material) #3000 manufactured by FUJIMI Inc. | 45.7 weight parts |
| Thermally-Expandable Microcapsules | ADVANCELL EHM303 manufactured by Sekisui Chemical Co., Ltd. | 1.30 weight parts |
| Adhesive Binder A | Photo-curable resin KAYARAD DPCA-60 manufactured by Nippon Kayaku Co., Ltd. | 12.4 weight parts |
| Adhesive Binder B | Photo-curable resin KAYARAD R-172 manufactured by Nippon Kayaku Co., Ltd. | 8.5 weight parts |
| Antisettling Agent | ASAT250F manufactured by ITOH OIL CHEMICALS Co., Ltd. | 1.3 weight parts |
| Photopolymerization Initiator | Omnirad 819 manufactured by IGM Resins B.V. | 0.8 weight parts |
| Solvent | MEK (methyl ethyl ketone) manufactured by SANKYO CHEMICAL Co., Ltd. | 30.0 weight parts |

### (Comparative Example 1)

Except that the composition of raw materials for producing the application liquid for the abrasive material layer was set as shown in the following table (thermally-expandable microcapsules are blended in a much smaller amount), a sheet-like abrasive article was produced in the same manner as that in Example 1.

**Table 4**

| | | |
|---|---|---|
| Abrasive Grains | GC (green silicon carbide abrasive material) #3000 manufactured by FUJIMI Inc. | 46.1 weight parts |
| Thermally-Expandable Microcapsules | ADVANCELL EHM303 manufactured by Sekisui Chemical Co., Ltd. | 0.26 weight parts |
| Adhesive Binder A | Photo-curable resin KAYARAD DPCA-60 manufactured by Nippon Kayaku Co., Ltd. | 12.5 weight parts |
| Adhesive Binder B | Photo-curable resin KAYARAD R-172 manufactured by Nippon Kayaku Co., Ltd. | 8.6 weight parts |
| Antisettling Agent | ASAT250F manufactured by ITOH OIL CHEMICALS Co., Ltd. | 1.3 weight parts |
| Photopolymerization Initiator | Omnirad 819 manufactured by IGM Resins B.V. | 0.9 weight parts |
| Solvent | MEK (methyl ethyl ketone) manufactured by SANKYO CHEMICAL Co., Ltd. | 30.3 weight parts |

### (Example 3)

Except that the composition of raw materials for producing the application liquid for the abrasive material layer was set as shown in the following table, a sheet-like abrasive article was produced in the same manner as that in Example 1.

**Table 5**

| | | |
|---|---|---|
| Abrasive Grains | GC (green silicon carbide abrasive material) #4000 manufactured by FUJIMI Inc. | 41.1 weight parts |
| Thermally-Expandable Microcapsules | ADVANCELL EHM303 manufactured by Sekisui Chemical Co., Ltd. | 2.54 weight parts |
| Adhesive Binder A | Photo-curable resin KAYARAD DPCA-60 manufactured by Nippon Kayaku Co., Ltd. | 11.7 weight parts |
| Adhesive Binder B | Photo-curable resin KAYARAD R-172 manufactured by Nippon Kayaku Co., Ltd. | 9.6 weight parts |
| Antisettling Agent | ASAT250F manufactured by ITOH OIL CHEMICALS Co., Ltd. | 1.4 weight parts |
| Photopolymerization Initiator | Omnirad 819 manufactured by IGM Resins B.V. | 0.8 weight parts |
| Solvent | MEK (methyl ethyl ketone) manufactured by SANKYO CHEMICAL Co., Ltd. | 32.9 weight parts |

### (Evaluation 1 of Abrasive Articles)

With regard to the abrasive articles produced in Examples 1, 2 and 3 and Comparative Example 1, their performances were evaluated in the following manner.

Specifically, abrasive scratches were formed on the surface of ECO ROCK Anti-Scratch Clear TR, a vehicle coating material manufactured by Rock Paint Co., Ltd., by using Tolecut K-2000, an abrasive film manufactured by KOVAX CORPORATION, thereby preparing a workpiece material. Each of the abrasive articles produced in Examples 1, 2 and 3, and Comparative Example 1 was attached to an air sander KT-501 manufactured by KOVAX CORPORATION, and pressed against the workpiece material at a normal pressure when using a hand-held air tool, under conditions including an air pressure of 0.5 MPa and an air flow rate setting of 2.5, to process the surface of the workpiece material formed with the abrasive scratches, using grinding water, whereafter an area where the scratches could be removed was measured.

For reference, the same evaluation was performed using each of two 32ϕ abrasive materials (Trizact 466AA5 #3000 equivalent, Trizact 466LAA3 #4000 equivalent) manufactured by 3M Japan Limited. (Reference Example 1, Reference Example 2)

The results are summarized in the following table.

**Table 6**

| | Inner Diameter of each Closed-Cell Body (µm) | Average Grain Size of Abrasive Grains (µm) | Volume Percent of Closed-Cell Bodies (%) | Volume Percent of Abrasive Grains (%) | Evaluation Result (cm²) |
|---|---|---|---|---|---|
| Example 1 | 101 | #3000 4.0µ | 82.7 | 7.2 | 300 |
| Example 2 | 101 | #3000 4.0µ | 70.3 | 12.3 | 170 |
| Comparative Example 1 | 101 | #3000 4.0µ | 31.9 | 39.9 | 30 |
| Reference Example 1 | - | # 3000 equivalent | - | - | 150 |
| Example 3 | 101 | #4000 3.0µ | 82.7 | 6.6 | 250 |
| Reference Example 2 | - | # 4000 equivalent | - | - | 110 |

From the evaluation results, it is understood that the present invention could remove abrasive scratches over a larger area as compared to the Comparative Example or the Reference Examples.

### (Example 4)

Just as with Example 1, the abrasive article including the top coat was produced. Then, a pressure-sensitive adhesive was applied to the back side of the abrasive surface of the abrasive article (the second surface of the substrate on the side opposite to the first surface thereof in contact with the abrasive material layer) to form a pressure-sensitive adhesive layer on the second surface, and a 5 mm-thick sponge (PLS-30 manufactured by Marusuzu Co. Ltd.) was attached to the abrasive material layer through the pressure-sensitive adhesive layer. Further, a hook and loop fastener was adhesively attached to the sponge. This intermediate product was subj ected to cutout processing using a hydraulic press cutting die to produce a 75ϕ sheet-like abrasive article.

### (Example 5)

Just as with Example 2, the abrasive article including the top coat was produced Then, a pressure-sensitive adhesive was applied to the back side of the abrasive surface of the abrasive article (the second surface of the substrate on the side opposite to the first surface thereof in contact with the abrasive material layer) to form a pressure-sensitive adhesive layer on the second surface, and a 5 mm-thick sponge (PLS-30 manufactured by Marusuzu Co. Ltd.) was attached to the abrasive material layer through the pressure-sensitive adhesive layer. Further, a hook and loop fastener was adhesively attached to the sponge. This intermediate product was subj ected to cutout processing using a hydraulic press cutting die to produce a 75ϕ sheet-like abrasive article.

### (Example 6)

Except that raw materials for producing an application liquid for the abrasive material layer, and the composition of the raw materials were set as follows, and the same abrasive grains (GC (green silicon carbide abrasive material) #6000 manufactured by FUJIMI Inc.) used in the application liquid for the abrasive material layer was also used in an application liquid for the top coat, an abrasive article was produced in the same manner as that in Example 4.

**TABLE 7**

| | | |
|---|---|---|
| Abrasive Grains | GC (green silicon carbide abrasive material) #6000 manufactured by FUJIMI Inc. | 38.2 weight parts |
| Thermally-Expandable Microcapsules | ADVANCELL EHM303 manufactured by Sekisui Chemical Co., Ltd. | 2.40 weight parts |
| Adhesive Binder A | Photo-curable resin KAYARAD DPCA-60 manufactured by Nippon Kayaku Co., Ltd. | 10.8 weight parts |
| Adhesive Binder B | Photo-curable resin KAYARAD R-172 manufactured by Nippon Kayaku Co., Ltd. | 9.3 weight parts |
| Antisettling Agent | ASAT250F manufactured by ITOH OIL CHEMICALS Co., Ltd. | 1.5 weight parts |
| Photopolymerization Initiator | Omnirad 819 manufactured by IGM Resins B.V. | 0.8 weight parts |
| Solvent | MEK (methyl ethyl ketone) manufactured by SANKYO CHEMICAL Co., Ltd. | 37.0 weight parts |

### (Example 7)

Except that raw materials for producing an application liquid for the abrasive material layer, and the composition of the raw materials were set as follows, and the same abrasive grains (GC (green silicon carbide abrasive material) #8000 manufactured by FUJIMI Inc.) used in the application liquid for the abrasive material layer was also used in an application liquid for the top coat, an abrasive article was produced in the same manner as that in Example 4.

**TABLE 8**

| | | |
|---|---|---|
| Abrasive Grains | GC (green silicon carbide abrasive material) #8000 manufactured by FUJIMI Inc. | 30.1 weight parts |
| Thermally-Expandable Microcapsules | ADVANCELL EHM303 manufactured by Sekisui Chemical Co., Ltd. | 2.34 weight parts |
| Adhesive Binder A | Photo-curable resin KAYARAD DPCA-60 manufactured by Nippon Kayaku Co., Ltd. | 10.0 weight parts |
| Adhesive Binder B | Photo-curable resin KAYARAD R-172 manufactured by Nippon Kayaku Co., Ltd. | 10.0 weight parts |
| Antisettling Agent | ASAT250F manufactured by ITOH OIL CHEMICALS Co., Ltd. | 1.7 weight parts |
| Photopolymerization Initiator | Omnirad 819 manufactured by IGM Resins B.V. | 0.8 weight parts |
| Solvent | MEK (methyl ethyl ketone) manufactured by SANKYO CHEMICAL CO., LTD. | 45.1 weight parts |

### (Evaluation 2 of Abrasive Articles)

With regard to the abrasive articles produced in Examples 4 and 5, their performances were evaluated in the same manner as that in the evaluation 1, except that 283 53 manufactured by 3M Japan Limited was used as an air sander.

For reference, the same evaluation was performed using a 75ϕ abrasive material with a foam (Trizact Finishing Disc #3000) manufactured by 3M Japan Limited. (Reference Example 3)

The results are summarized in the following table.

**TABLE 9**

| | Inner Diameter of each Closed-Cell Body (µm) | Average Grain Size of Abrasive Grains (µm) | Volume Percent of Closed-Cell Bodies (%) | Volume Percent of Abrasive Grains (%) | Evaluation Result (cm²) |
|---|---|---|---|---|---|
| Example 4 | 101 | # 3000 4.0µ | 82.7 | 7.2 | 1200 |
| Reference Example 3 | - | # 3000 | - | - | 900 |
| Example 5 | 101 | #4000 3.0µ | 82.7 | 6.6 | 1000 |

From the evaluation results, it is understood that the present invention could remove abrasive scratches over a larger area as compared to the Reference Example.

### (Evaluation 3 of Abrasive Articles)

With regard to the abrasive articles produced in Example 6, its performance was evaluated in the same manner as that in the evaluation 2, except that abrasive scratches were formed by the abrasive article produced in Example 4 (#3000).

For reference, the same evaluation was performed using a 75ϕ abrasive material with a foam (Trizact Finishing Disc #5000) manufactured by 3M Japan Limited. (Reference Example 4)

The results are summarized in the following table.

**TABLE 10**

| | Inner Diameter of each Closed-Cell Body (µm) | Average Grain Size of Abrasive Grains (µm) | Volume Percent of Closed-Cell Bodies (%) | Volume Percent of Abrasive Grains (%) | Evaluation Result (cm²) |
|---|---|---|---|---|---|
| Example 6 | 101 | # 6000 | 82.7 | 6.5 | 1200 |
| Reference Example 4 | - | # 5000 | - | - | 800 |

From the evaluation results, it is understood that the present invention could remove abrasive scratches over a larger area as compared to the Reference Example.

### (Evaluation 4 of Abrasive Articles)

With regard to the abrasive articles produced in Example 7, its performance was evaluated in the same manner as that in the evaluation 2, except that abrasive scratches were formed by the abrasive article produced in Example 5 (#4000).

For reference, the same evaluation was performed using a 75ϕ abrasive material with a foam (Trizact Finishing Disc #8000) manufactured by 3M Japan Limited. (Reference Example 5)

The results are summarized in the following table.

**TABLE 11**

| | Inner Diameter of each Closed-Cell Body (µm) | Average Grain Size of Abrasive Grains (µm) | Volume Percent of Closed-Cell Bodies (%) | Volume Percent of Abrasive Grains (%) | Evaluation Result (cm²) |
|---|---|---|---|---|---|
| Example 7 | 101 | # 8000 | 83.5 | 5.3 | 1200 |
| Reference Example 5 | - | # 8000 | - | - | 800 |

From the evaluation results, it is understood that the present invention could remove abrasive scratches over a larger area as compared to the Reference Example.

### LIST OF REFERENCE SIGNS

1: substrate
2: abrasive grain
3: adhesive binder
4: thermally-expandable microcapsule
5: abrasive grain (for top coat)
6: metal soap
7: adhesive binder (for top coat)
8: pressure-sensitive adhesive (or adhesive)
9: sponge
10: pressure-sensitive adhesive (or double-sided adhesive tape)
11: hook and loop fastener
12: release sheet

## Claims

1. A sheet-like abrasive article comprising a substrate, and an abrasive material layer provided on one surface of the substrate, wherein the abrasive material layer comprises closed-cell bodies, first abrasive grains, and a first adhesive binder, wherein:
each of the closed-cell bodies has an inner diameter of 30 µm to 200 µm;
the first abrasive grains have an average grain size which is equal to or less than of one third of the inner diameter of each of the closed-cell bodies; and
the first adhesive binder adhesively bonds the abrasive material layer to the substrate,
and wherein the closed-cell bodies, the first abrasive grains and the first adhesive binder account for 70% by volume to 85% by volume, 5% by volume to 13% by volume, and a remainder, respectively, based on a volume of an entirety of the abrasive material layer.

2. The sheet-like abrasive article as claimed in claim 1, further comprising a top coat provided on one surface of the abrasive material layer on a side opposite to the other surface thereof in contact with the substrate, wherein the top coat comprises second abrasive grains, a second adhesive binder and a metal soap, the second adhesive binder adhesively bonding the top coat to the abrasive material layer.

3. The sheet-like abrasive article as claimed in claim 1 or 2, wherein the closed-cell bodies are derived from thermally-expandable microcapsules.

4. The sheet-like abrasive article as claimed in claim 1 or 2, wherein the first adhesive binder is composed of a photo-curable resin.

5. The sheet-like abrasive article as claimed in claim 1 or 2, further comprising a cushioning material layer provided on the other surface of the substrate on a side opposite to the one surface thereof in contact of the abrasive material layer.

6. The sheet-like abrasive article as claimed in claim 5, wherein the cushioning material layer is composed of sponge.

7. The sheet-like abrasive article as claimed in any one of claims 1, 2 and 5, further comprising a pressure-sensitive adhesive layer provided on one surface of the sheet-like abrasive article on a side opposite to the top coat or the abrasive material layer.

8. The sheet-like abrasive article as claimed in any one of claims 1, 2 and 5, further comprising an engagement member layer provided on one surface of the sheet-like abrasive article on a side opposite to the top coat or the abrasive material layer.

9. The sheet-like abrasive article as claimed in any one of claims 1, 2 and 5, wherein the engagement is a hook and loop fastener.
